# EUROPEAN PATENT APPLICATION

(11) **EP 4 725 726 A1**
(43) Date of publication of application: **15.04.2026**
(21) Application number: 25204222.1
(22) Date of filing: 24.09.2025
(51) Int. Cl.: B60H 1/32, B60H 1/00

(54) **IN-VEHICLE AIR CONDITIONER**

(30) Priority: 11.10.2024 JP 2024178609
(71) Applicant: Toyota Jidosha Kabushiki Kaisha, Toyota-shi, Aichi-ken 471-8571 (JP)
(72) Inventor: TSUCHIYA, Akira, 471-8571 Toyota-shi, Aichi-ken (JP)
(74) Representative: Cabinet Beau de Loménie

(57) **Abstract**

An in-vehicle air conditioner (12, 12a) includes a refrigerant circuit (R, Ra) for circulating a hydrocarbon refrigerant, the refrigerant circuit (R, Ra) having a compressor (20), a condenser (22), an expansion valve (24a), and an evaporator (26a). The in-vehicle air conditioner (12, 12a) includes a heat exchanger (40) which is integrally formed with the evaporator (26a) of the refrigerant circuit (R, Ra) to cool a cooling liquid with the refrigerant contained in the evaporator (26a), and a cooling liquid circuit (C2, C2a) for circulating the cooling liquid. The cooling liquid circuit (C2, C2a) has a cooler core (72). The cooling liquid circuit (C2, C2a) includes a gas-liquid separator (100) and a relief valve (102). The relief valve (102) is disposed on a top part of the gas-liquid separator (100) outside a vehicle compartment (90) and is configured to open when a pressure inside the gas-liquid separator (100) is increased.

## Description

### TECHNICAL FIELD

This specification discloses an in-vehicle air conditioner, particularly an in-vehicle air conditioner using a hydrocarbon refrigerant.

### BACKGROUND

In recent years, hydrocarbon refrigerants (HC refrigerants) such as propane, which have a low global warming potential, are being considered for use as refrigerants in air conditioners. Since HC refrigerants are flammable, configurations to prevent refrigerant leakage and ensure safety in the event of refrigerant leakage are being studied.

Patent Literature 1 (JP 2007-62683 A) discloses the use of propane as a refrigerant for vehicle air conditioner. The air conditioner described in Patent Literature 1 is configured such that a refrigeration circuit is installed in the engine room, the engine room is partitioned from the vehicle compartment by a partition wall, and the cooling capacity of the refrigeration circuit is transferred to the vehicle compartment by heat pipes passing through the partition wall, so that even if refrigerant leaks from the refrigeration circuit, it does not flow into the vehicle compartment.

### SUMMARY

In an in-vehicle air conditioner, in addition to a hydrocarbon refrigerant circuit, a cooling liquid circuit in which a cooling liquid cooled by the refrigerant circuit circulates may be provided, and the air blown into the vehicle compartment may be cooled using the cooling liquid in the cooling liquid circuit.

Specifically, a refrigerant circuit is provided in which a hydrocarbon refrigerant circulates, comprising a compressor, a condenser for heat dissipation, an expansion valve, and an evaporator for heat absorption. A heat exchanger is provided which is integrally formed with the evaporator of the refrigerant circuit and cools a cooling liquid by the refrigerant in the evaporator. In addition, a cooling liquid circuit is provided to circulate the cooling liquid and supply it to a cooler core, which cools the air to be blown into the vehicle compartment. With this configuration, since the hydrocarbon refrigerant circuit is not located in the passageway of the air to be blown into the vehicle compartment, the risk of hydrocarbon refrigerant leaking into the vehicle compartment can be reduced.

Here, the above heat exchanger exchanges heat between the hydrocarbon refrigerant and the cooling liquid. If this heat exchanger is damaged due to deterioration, etc., the hydrocarbon refrigerant may flow into the cooling liquid circuit. Even if hydrocarbon refrigerant flows into the cooling liquid circuit, it is desirable to have a configuration that allows the hydrocarbon refrigerant that has flowed into the cooling liquid circuit to be discharged from the cooling liquid circuit outside the vehicle compartment, thereby reducing the risk of hydrocarbon refrigerant leaking into the vehicle compartment.

This specification discloses an in-vehicle air conditioner that enables a hydrocarbon refrigerant that has flowed into a cooling liquid circuit to be discharged from the cooling liquid circuit outside the vehicle compartment.

An in-vehicle air conditioner disclosed in this specification includes a refrigerant circuit for circulating a hydrocarbon refrigerant, the refrigerant circuit includes a compressor, a condenser for heat dissipation, an expansion valve, and an evaporator for heat absorption. The in-vehicle air conditioner includes a heat exchanger which is integrally formed with the evaporator of the refrigerant circuit to cool a cooling liquid with the refrigerant contained in the evaporator; a cooling liquid circuit for circulating the cooling liquid, the cooling liquid circuit having a cooler core; and an air conditioning unit which includes an air passage in which the cooler core is disposed, the air conditioning unit configured to cool air passing through the air passage by the cooler core and supply the cooled air to a vehicle compartment. The cooling liquid circuit includes a gas-liquid separator and a relief valve. The relief valve is disposed on a top part of the gas-liquid separator outside the vehicle compartment and is configured to open when a pressure inside the gas-liquid separator is increased.

According to this configuration, when a hydrocarbon refrigerant flows into the cooling liquid circuit, the gaseous hydrocarbon refrigerant is collected in the gas-liquid separator, and the pressure inside the gas-liquid separator is increased. As a result, the relief valve opens, allowing the hydrocarbon refrigerant inside the gas-liquid separator to be discharged from the cooling liquid circuit to the outside of the vehicle compartment.

In the in-vehicle air conditioner according to the present disclosure, the cooling liquid circuit further may include a hose connected to an exhaust port of the relief valve and extending downward in a vehicle.

According to this configuration, when the relief valve opens, hydrocarbon refrigerant can be guided through the hose to the underside of the vehicle.

In the in-vehicle air conditioner according to the present disclosure, the cooling liquid circuit further may include a pressure sensor configured to detect a pressure in piping of the cooling liquid circuit, and electromagnetic valves respectively disposed upstream and downstream of the cooler core in the cooling liquid circuit outside the vehicle compartment. The in-vehicle air conditioner further may include a controller. The controller may be configured to control both of the electromagnetic valves to be set to a closed position when a detection value from the pressure sensor becomes higher than a predetermined value, and otherwise maintain both of the electromagnetic values in an open position.

According to this configuration, when a hydrocarbon refrigerant flows into the cooling liquid circuit, the pressure in the piping of the cooling liquid circuit increases and the two electromagnetic valves are controlled to close, thereby preventing the hydrocarbon refrigerant from flowing into the part of the cooling liquid circuit located on the vehicle compartment side.

In the in-vehicle air conditioner according to the present disclosure, when both of the electromagnetic valves are in the closed position, at least one of the electromagnetic values is set to the open position so as to function as a relief valve when a pressure is increased in a portion of the piping that extends from the electromagnetic values to the cooler core in the cooling liquid circuit.

According to this configuration, when the pressure is increased in a portion of the piping that extends from the electromagnetic values to the cooler core in the cooling liquid circuit due to vaporization of the cooling liquid, etc., while the two electromagnetic valves are controlled to be closed, at least one of the two electromagnetic valves opens, thereby preventing damage to the piping of the cooling liquid circuit from the pressure.

In the in-vehicle air conditioner according to the present disclosure, the hydrocarbon refrigerant may be a refrigerant composed of propane or a refrigerant mainly composed of propane.

A vehicle disclosed in this specification includes the above-mentioned in-vehicle air conditioner.

According to the technology disclosed in this specification, hydrocarbon refrigerant that has flowed into the cooling liquid circuit can be discharged from the cooling liquid circuit outside the vehicle compartment.

### BRIEF DESCRIPTION OF DRAWINGS

Embodiments of the present disclosure will be described based on the following figures, wherein:
FIG. 1 is a schematic diagram showing the configuration of an air conditioner;
FIG. 2 is a schematic diagram showing the layout of air conditioner in a vehicle;
FIG. 3 is a diagram showing the configuration of the second cooling liquid circuit;
FIG. 4 is a diagram showing a state in which hydrocarbon refrigerant has flowed into the second cooling liquid circuit;
FIG. 5 is a diagram showing a state in which the cooling liquid has leaked from the second cooling liquid circuit;
FIG. 6 is a diagram showing the configuration of another second cooling liquid circuit;
FIG. 7 is a schematic diagram showing the configuration of another air conditioner.
FIG. 8A is a diagram showing an example of a relief valve.
FIG. 8B is another diagram showing an example of a relief valve.

### DESCRIPTION OF EMBODIMENTS

### <Preface>

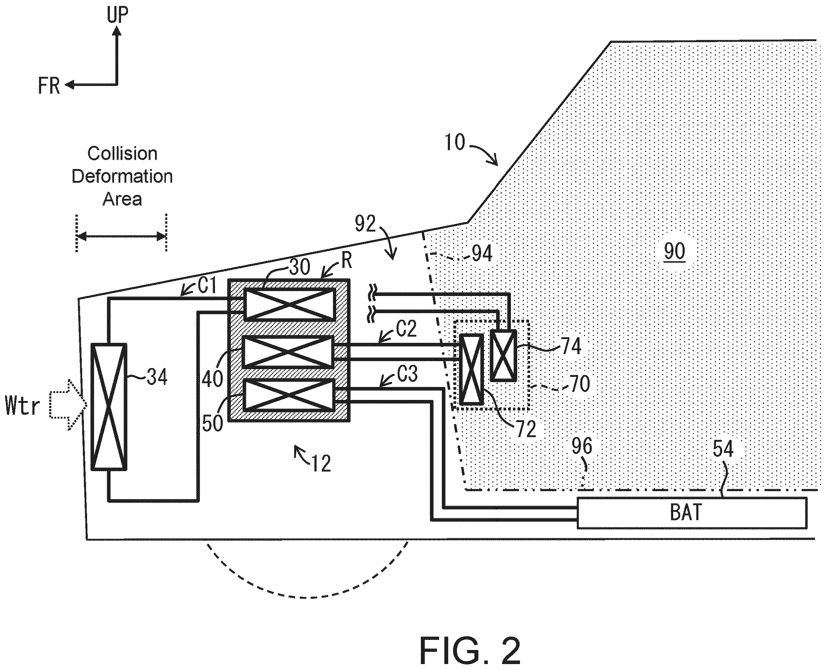

The embodiment will be described below with reference to the drawings. In all drawings, the same reference numerals indicate the same elements, and duplicate descriptions are omitted. In the following description, unless otherwise specified, terms indicating directions and orientations such as front, rear, left, right, up, and down refer to directions and orientations relative to the vehicle. In FIG. 2 described below, the direction of the arrow FR indicates forward, and the direction of the arrow UP indicates upward.

The air conditioner is installed in a vehicle such as an automobile. In the embodiments described below, the type of vehicle in which the air conditioner is installed is not limited. For example, the vehicle may be an engine vehicle powered by an engine or an electric vehicle powered by a motor. The vehicle may also be a Hybrid Electric Vehicle (HEV) or a Plug-in Hybrid Electric Vehicle (PHEV) equipped with both an engine and a motor. The vehicle may also be a Fuel Cell Electric Vehicle (FCEV) equipped with a fuel cell, or a Battery Electric Vehicle (BEV) that travels on electric power stored in a battery.

The air conditioner includes a refrigerant circuit in which a hydrocarbon refrigerant (referred to as a HC refrigerant) circulates. HC refrigerants are flammable. Examples of HC refrigerants include propane, butane, isobutane, ethane, ethylene, and propylene. In the refrigerant circuit, one type of these HC refrigerants or a mixture of two or more of these HC refrigerants may be used. In addition, a mixed refrigerant containing one or more types of HC refrigerants as the main components and including a refrigerant other than HC refrigerants and various additives may be used in the refrigerant circuit. For example, in a refrigerant circuit, propane or a refrigerant containing propane as the main component and at least one of other refrigerants and additives (a refrigerant containing propane as the main component) may be used. An HC refrigerant may be R290, for example. In this specification, hydrocarbon refrigerants (HC refrigerants) refer to pure hydrocarbon refrigerants or refrigerants containing hydrocarbon refrigerants as the main component.

The refrigerant circuit is the heat source for the air conditioner. The refrigerant circuit includes, in order along the direction of refrigerant flow, a compressor, a condenser for heat dissipation, an expansion valve, and an evaporator for heat absorption. A receiver may be provided between the condenser and the expansion valve. An accumulator may also be provided between the evaporator and the compressor.

The air conditioner may include a high-temperature cooling liquid circuit in which cooling liquid heated by a condenser of a refrigerant circuit circulates, and a low-temperature cooling liquid circuit in which cooling liquid cooled by an evaporator of the refrigerant circuit circulates. The cooling liquid is a heat transfer medium, and the high-temperature cooling liquid circuit and the low-temperature cooling liquid circuit are each a heat transfer medium circuit.

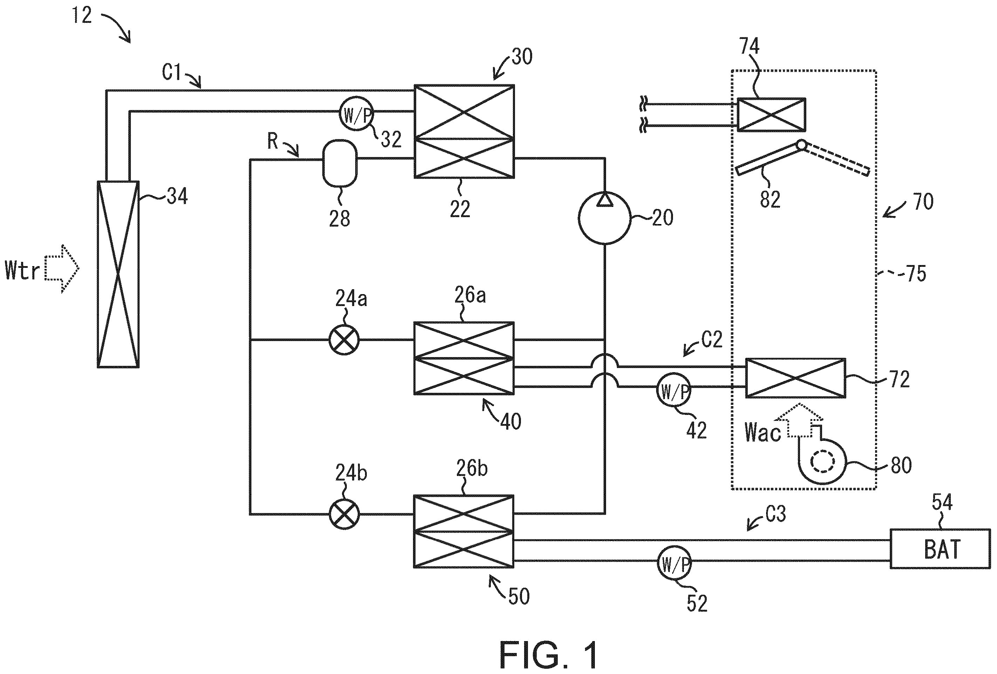

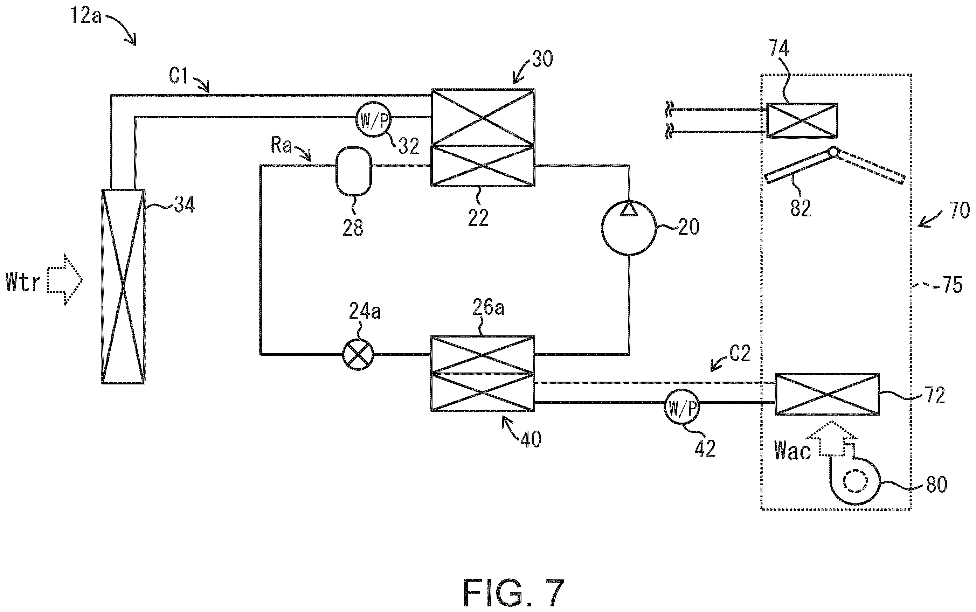

In the embodiment described below, as shown in FIG. 1, the air conditioner 12 includes the first cooling liquid circuit C1 as a high-temperature cooling liquid circuit and second and third cooling liquid circuits C2 and C3 as low-temperature cooling liquid circuits. The air conditioner 12 may be configured without the third cooling liquid circuit C3, which is described with reference to FIG. 7.

The cooling liquids of the first to third cooling liquid circuits C1, C2, and C3 may be cooling water. That is, the cooling liquid may be water without additives, water mixed with additives such as antifreeze agents or corrosion inhibitors, or coolant fluid. Furthermore, the cooling liquids may be a liquid heat transfer medium such as oil, and are not limited to the above.

In the embodiment described below, the refrigerant circuit is located under the front hood of the vehicle. Hereinafter, regardless of the presence or absence of a power source (engine, motor, etc.) under the front hood and the type of power source, the area under the front hood is referred to as the "engine room".

### <Embodiment>

FIG. 1 is a schematic diagram showing the configuration of an air conditioner 12 according to an embodiment. FIG. 2 is a schematic diagram showing the arrangement of an air conditioner 12 in a vehicle. The vehicle 10 includes the battery 54 that supplies power to a motor as a power source. The vehicle 10 may be, for example, a Battery Electric Vehicle (BEV), a Hybrid Electric Vehicle (HEV), or a Plug-in Hybrid Electric Vehicle (PHEV).

The air conditioner 12 air-conditions the vehicle compartment 90 and cools the battery 54. The air conditioner 12 may be configured to cool in-vehicle device such as a power control unit (PCU) together with the battery 54 or in place of the battery 54.

As shown in FIG. 1, the air conditioner 12 includes the refrigerant circuit R that serves as a heat source, the first to third cooling liquid circuits C1, C2, and C3, and the air conditioning unit 70. The first cooling liquid circuit C1 circulates a first cooling liquid heated by the refrigerant in the refrigerant circuit R. The second cooling liquid circuit C2 circulates a second cooling liquid cooled by the refrigerant in the refrigerant circuit R. Similarly, the third cooling liquid circuit C3 circulates a third cooling liquid cooled by the refrigerant in the refrigerant circuit R. The air conditioning unit 70 supplies air cooled by the second cooling liquid circulating in the second cooling liquid circuit C2 to the vehicle compartment.

The refrigerant circuit R is a closed circuit for circulating an HC refrigerant (hereinafter simply referred to as "refrigerant"), which is configured by the compressor 20, the condenser 22, the receiver 28, the expansion valves 24a and 24b, and the evaporators 26a and 26b connected in series by refrigerant pipes. The expansion valve 24a and the evaporator 26a are connected in series, and similarly, the expansion valve 24b and the evaporator 26b are connected in series. The refrigerant flow paths of the expansion valve 24a and the evaporator 26a, and the refrigerant flow paths of the expansion valve 24b and the evaporator 26b are connected in parallel.

The air conditioner 12 includes the heat exchanger 30. The heat exchanger 30 is integrally formed with the condenser 22 of the refrigerant circuit R and causes heat exchange between the refrigerant of the refrigerant circuit R and the first cooling liquid of the first cooling liquid circuit C1. The heat exchanger 30 is a water-cooled condenser and may be, for example, a plate-type heat exchanger. The heat exchanger 30 is a first heat exchanger.

The first cooling liquid circuit C1 is a closed circuit for circulating the first cooling liquid, which is configured by connecting the water pump 32, the heat exchanger 30, and the radiator 34 in series with cooling liquid pipes. The radiator 34 is a heat exchanger for heat exchange between the first cooling liquid and the vehicle traveling wind Wtr. In the first cooling liquid circuit C1, the first cooling liquid pumped by the water pump 32 becomes hot due to the heat dissipated by the refrigerant in the condenser 22 in the refrigerant circuit R as it passes through the heat exchanger 30. The hot first cooling liquid is sent to the radiator 34, where it is cooled by the vehicle traveling wind Wtr.

The air conditioner 12 also includes the heat exchanger 40. The heat exchanger 40 is integrally formed with the evaporator 26a of the refrigerant circuit R and causes heat exchange between the refrigerant of the refrigerant circuit R and the second cooling liquid of the second cooling liquid circuit C2. The heat exchanger 40 may be, for example, a plate-type heat exchanger. The heat exchanger 40 is a second heat exchanger.

The second cooling liquid circuit C2 is a closed circuit for circulating the second cooling liquid, which is configured by connecting the water pump 42, the heat exchanger 40, and the cooler core 72 in series with cooling liquid pipes. The cooler core 72 is a heat exchanger for heat exchange between the second cooling liquid and air conditioning wind Wac, and is disposed in the air passage 75 of the air conditioning unit 70. In the second cooling liquid circuit C2, the second cooling liquid pumped by the water pump 42 is cooled by the heat absorbed from the refrigerant in the evaporator 26a in the refrigerant circuit R as it passes through the heat exchanger 40. The cooled second cooling liquid is sent to the cooler core 72, where it cools the air conditioning wind Wac.

The air conditioner 12 also includes the heat exchanger 50. The heat exchanger 50 is integrally formed with the evaporator 26b of the refrigerant circuit R and causes heat exchange between the refrigerant of the refrigerant circuit R and the third cooling liquid of the third cooling liquid circuit C3. The heat exchanger 50 may be, for example, a plate-type heat exchanger. The heat exchanger 50 is a third heat exchanger.

The third cooling liquid circuit C3 is a closed circuit for circulating the third cooling liquid, which is configured by connecting the water pump 52, the heat exchanger 50, and the battery 54 in series with cooling liquid pipes. In the third cooling liquid circuit C3, the cooling liquid pumped by the water pump 52 is cooled by the heat absorbed from the refrigerant in the evaporator 26b in the refrigerant circuit R as it passes through the heat exchanger 50. The cooled third cooling liquid is sent to the battery 54 to cool the battery 54. In this specification, the third cooling liquid circuit C3 and the third cooling liquid are also referred to as the battery cooling liquid circuit and the battery cooling liquid, respectively.

In this specification, the expansion valve 24a, the evaporator 26a, and the heat exchanger 40 are also referred to as the air conditioner expansion valve, the air conditioner evaporator, and the air conditioner heat exchanger, respectively. In addition, the expansion valve 24b, the evaporator 26b, and the heat exchanger 50 are also referred to as the battery expansion valve, the battery evaporator, and the battery heat exchanger, respectively.

In the refrigerant circuit R, the refrigerant circulates as follows. The compressor 20 discharges high-pressure gaseous refrigerant, which is discharged into the condenser 22, where it is liquefied and condensed by heat exchange with the first cooling liquid of the first cooling liquid circuit C1 passing through the heat exchanger 30, thereby becoming high-pressure liquid refrigerant. The high-pressure liquid refrigerant flowing out of the condenser 22 is depressurized by the expansion valve 24a via the receiver 28, expands, becomes low-pressure refrigerant, and flows into the evaporator 26a. The low-pressure refrigerant flowing into the evaporator 26a evaporates by heat exchange with the second cooling liquid of the second cooling liquid circuit C2 passing through the heat exchanger 40 in the evaporator 26a, becomes a gas refrigerant, flows out of the evaporator 26a, and returns to the compressor 20.

In addition, the high-pressure liquid refrigerant flowing out of the condenser 22 is depressurized by the expansion valve 24b via the receiver 28, expands, becomes low-pressure refrigerant, and flows into the evaporator 26b. The low-pressure refrigerant flowing into the evaporator 26b evaporates by heat exchange with the third cooling liquid of the third cooling liquid circuit C3 passing through the heat exchanger 50 in the evaporator 26b, becomes a gas refrigerant, flows out of the evaporator 26b, and returns to the compressor 20.

The air conditioning unit 70 includes the blower 80 and the air passage 75 formed by the case (not shown). Inside the air passage 75, the blower 80, the cooler core 72, and the heater core 74 are arranged in order from the air flow direction. The heater core 74 is a heat exchanger to which cooling water heated by, for example, engine cooling water or a PTC heater for water heating is supplied. The heater core 74 may also be configured to be supplied with cooling liquid heated by the heat exchanger 30.

The blower 80 introduces air into the air passage 75 from the air intake port (not shown) and blows the air through the cooler core 72 and the heater core 74 to supply temperature-controlled air to the vehicle compartment. The air-mix door 82 is provided inside the air passage 75, and the air-mix door 82 adjusts the ratio of air passing through the cooler core 72 to the heater core 74. The air conditioning unit 70 may employ conventional HVAC (Heating, Ventilation, and Air Conditioning) technology.

As shown in FIG. 2, the engine room 92 and the vehicle compartment 90 are partitioned by the dashboard 94. The instrument panel (not shown) is provided on the vehicle compartment 90 side of the dashboard 94. The air conditioning unit 70 is disposed between the instrument panel and the dashboard 94.

The battery 54 is located under the floor of the vehicle compartment 90, i.e., under the floor panel 96. The battery 54 may also be located under the seats or in the rear of the vehicle, and its position is not limited.

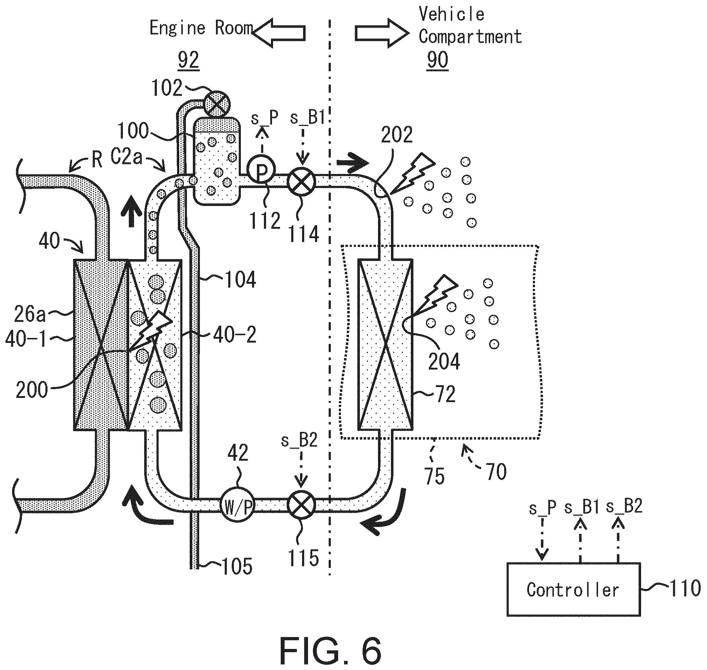

The air conditioner 12 includes a controller. The controller may be the same as or different from the controller 110 shown in FIG. 6 described later. The controller may be configured to include processor(s) and memory device(s), and may be, for example, an ECU (Electronic Control Unit). The controller controls the devices included in the air conditioner 12 based on detection information from a plurality of sensors (temperature sensors that detect outside air temperature, inside air temperature, and battery temperature, a solar radiation sensor, a pressure sensor, etc.) and setting information from a control panel operated by the user. The controller may employ conventional air conditioner control technology.

The refrigerant circuit R is disposed in the engine room 92 as shown in FIG. 2. The first cooling liquid circuit C1 is disposed in front of the refrigerant circuit R. The refrigerant circuit R may be disposed behind the collision deformation area at the front of the vehicle. This reduces the collision load input to the refrigerant circuit R when the vehicle 10 is involved in a head-on collision.

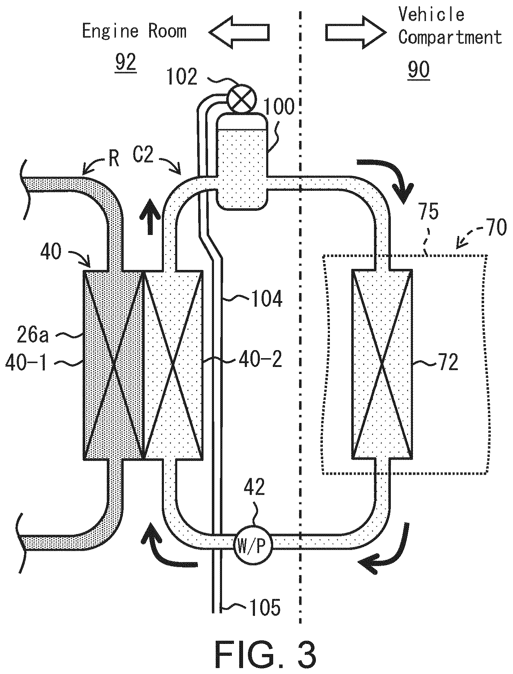

FIG. 3 shows the configuration of the second cooling liquid circuit C2 in more detail. In FIG. 3 and FIGs. 4 to 6 described below, the thick arrows on the outer circumference of the second cooling liquid circuit C2 (or C2a) indicate the flow direction of the second cooling liquid. Hereinafter, the second cooling liquid circuit C2 and the second cooling liquid are referred to simply as the cooling liquid circuit C2 and the cooling liquid, respectively.

As shown in FIG. 3, the cooling liquid circuit C2 includes the gas-liquid separator 100 and the relief valve 102. The gas-liquid separator 100 is a hollow box-like portion that extends upward and downward from the inner space of a portion of the upper piping of the cooling liquid circuit C2. The gas-liquid separator 100 separates the cooling liquid and the gas. The separated gas accumulates in the upper portion of the gas-liquid separator 100. The gas-liquid separator 100 is disposed outside the vehicle compartment 90, i.e., in the engine room 92.

The relief valve 102 is disposed at the upper portion of the gas-liquid separator 100. The relief valve 102 opens when the pressure inside the gas-liquid separator 100 is increased. The relief valve 102 is disposed in the engine room 92 outside the vehicle compartment 90. The cooling liquid circuit C2 includes the hose 104. The hose 104 is connected to the exhaust port of the relief valve 102 and extends downward of the vehicle body. The hose 104 is disposed in the engine room 92. The hose 104 is disposed at a distance from a heat-generating element such as an engine, a motor, or an inverter. The tip 105 of hose 104 is located at the bottom of the vehicle body. The tip 105 of hose 104 may be fixed to a vehicle structure located at the lower part (or bottom) of the engine compartment 92.

The heat exchanger 40 includes the primary side portion 40-1 and the secondary side portion 40-2. The primary side portion 40-1 is the evaporator 26a through which an HC refrigerant flows. The cooling liquid flows through the secondary side portion 40-2. The internal pressure of the refrigerant circuit R is generally higher than the internal pressure of the cooling liquid circuit C2 (heat transfer medium circuit). Therefore, the internal pressure of the primary side portion 40-1 of the heat exchanger 40 is higher than the internal pressure of the secondary side portion 40-2 of it.

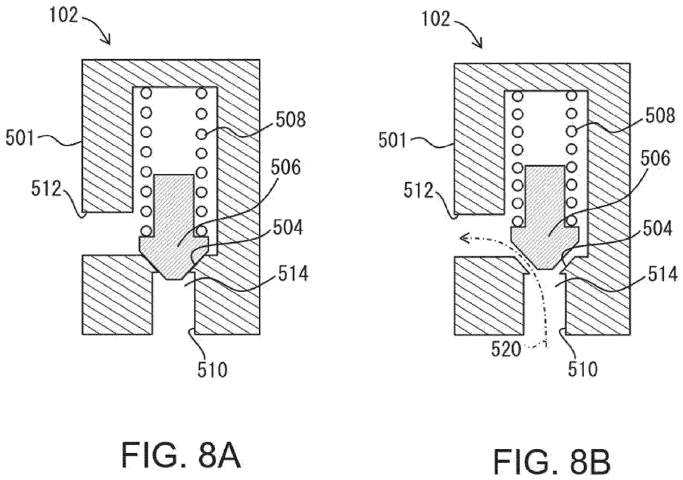

An example embodiment of the relief valve 102 will now be described with reference to FIG. 8A and 8B.

FIG. 8A is a diagram showing an example of a relief valve 102. The relief valve 102 includes a housing 501, a valve seat 504, a valve piston 506, and a spring 508. The housing 501 includes an inlet port 510 and an exhaust port 512. In the housing 501, there is a path 514 which connects between the inlet port 510 and the exhaust port 512. The valve seat 504 and the valve piston 506 are disposed in the path 514 of the housing 501. The spring 508 is disposed in the housing 501 to bias the valve piston 506 toward the valve seat 504. In this way, the piston comes in tight contact with the valve seat 504 to close the path 514. The inlet port 510 is on the opposite side of the valve piston 506 from the spring 508.

With reference to FIG. 8B, when gas 520 at a certain pressure enters through the inlet port 510, the valve piston 506 retracts against a biasing force of the spring 508 such that the valve piston 506 detaches from the valve seat 504. This opens the path 514 of the housing 501. The gas then is exhausted through the exhaust port 512 via the path 514. The inlet port 510 of the relief valve 102 is connected to the gas-liquid separator 100 in fluid communication with an upper inner space of the gas-liquid separator 100, while the exhaust port 512 of the relief valve 102 is connected to the hose 104 in fluid communication with an inner space of the hose 104.

Next, the effects of the embodiment described above will be explained.

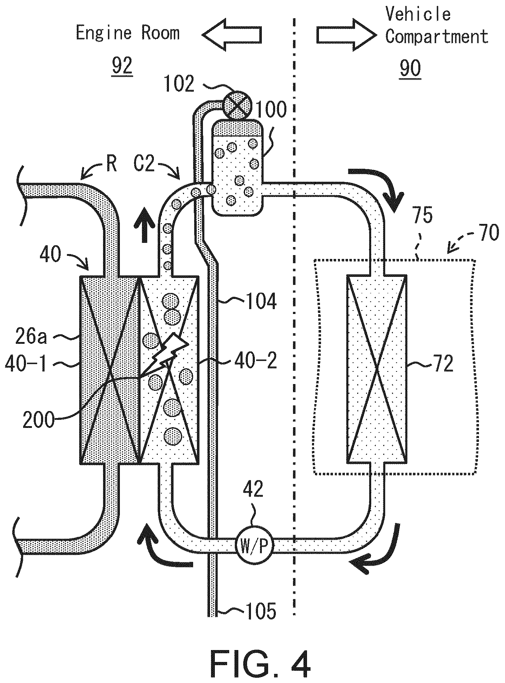

FIG. 4 shows a case where a damaged portion 200 has formed in the partition wall between the primary side portion 40-1 and the secondary side portion 40-2 of the heat exchanger 40 due to deterioration of the heat exchanger 40. In this case, the HC refrigerant from the primary side portion 40-1 flows into the secondary side portion 40-2. The HC refrigerant flows into the secondary side portion 40-2 in gaseous form. Alternatively, the HC refrigerant flows into the secondary side portion 40-2 and then becomes gaseous. The HC refrigerant then flows through the interior of the cooling liquid circuit C2 in a state mixed with the cooling liquid.

At this time, the HC refrigerant is collected by the gas-liquid separator 100 as shown in FIG. 4. The pressure inside the gas-liquid separator 100 is increased as the HC refrigerant is collected. As a result, the relief valve 102 opens, allowing the HC refrigerant in the gas-liquid separator 100 to be discharged outside the cooling liquid circuit C2 via the hose 104. Since the HC refrigerant is generally heavier than air, the HC refrigerant flows downward through the hose 104. Therefore, the HC refrigerant can be discharged to a relatively safe location at the bottom of the vehicle body.

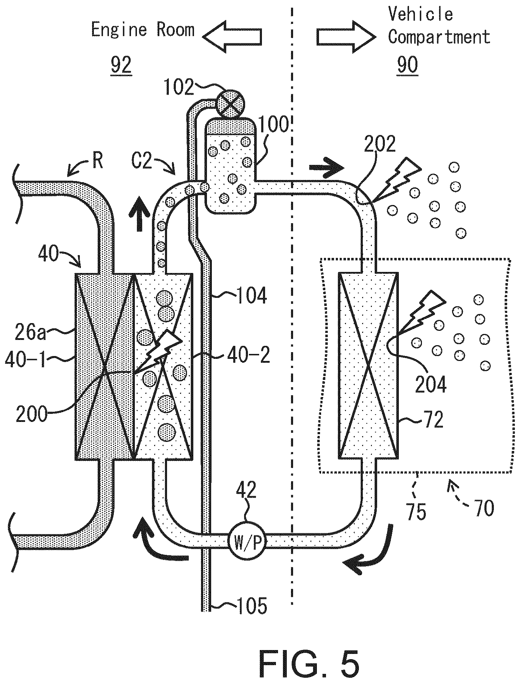

FIG. 5 shows a state in which the cooling liquid has leaked from the cooling liquid circuit C2. The figure shows a state in which a damaged portion 200 has formed in the heat exchanger 40, and damaged portions 202 and 204 have formed in the piping of the cooling liquid circuit C2 and the cooler core 72, respectively. As shown in FIG. 5, even if damage to the heat exchanger 40 and damage to the cooling liquid circuit C2 occur simultaneously, according to the embodiment described above, the HC refrigerant can be discharged from the cooling liquid circuit C2 outside the vehicle compartment 90, thereby preventing the HC refrigerant from leaking into the vehicle compartment 90.

Furthermore, according to the embodiment described above, when the pressure inside the cooling liquid circuit C2 is increased due to the inflow of the HC refrigerant into the cooling liquid circuit C2, the relief valve 102 opens, thereby suppressing damage to the piping of the cooling liquid circuit C2 due to the pressure rise.

The configuration of the gas-liquid separator 100, the relief valve 102, and the hose 104 described above can also be applied to the first cooling liquid circuit C1 or the third cooling liquid circuit C3.

### <Another cooling liquid circuit>

Next, another cooling liquid circuit will be described. FIG. 6 shows the configuration of another second cooling liquid circuit C2a. This cooling liquid circuit C2a has a pressure sensor 112 and two electromagnetic valves 114 and 115 added to the above cooling liquid circuit C2 (see FIG. 3). The pressure sensor 112 detects the pressure in the piping of the cooling liquid circuit C2. The electromagnetic valves 114 and 115 are respectively disposed upstream and downstream of the cooler core 72 in the cooling liquid circuit C2 outside the vehicle compartment 90 (inside the engine room 92).

The air conditioner 12 includes the controller 110. The controller 110 is configured to include processor(s) and memory device(s). The detection signal s_P from the pressure sensor 112 is input to the controller 110. The controller 110 outputs the control signals s_B1 and s_B2 to the electromagnetic valves 114 and 115.

When the detection signal s_P from the pressure sensor 112 indicates that the internal pressure of the cooling liquid circuit C2a is higher than a predetermined pressure value, i.e., when the HC refrigerant has flowed into the cooling liquid circuit C2a, the controller 110 controls the two electromagnetic valves 114 and 115 to close. In other cases, the controller 110 keeps the two electromagnetic valves 114 and 115 open. With this configuration, when the HC refrigerant flows into the cooling liquid circuit C2a, the two electromagnetic valves 114 and 115 close, thereby preventing the HC refrigerant from flowing out to a portion of the piping that extends from the electromagnetic values 114 and 115 to the cooler core 72 in the cooling liquid circuit C2a.

At least one of the two electromagnetic valves 114 and 115 may be configured to open (i.e., function as a relief valve) when the internal pressure is increased in a portion of the piping that extends from the electromagnetic values 114 and 115 to the cooler core 72 in the cooling liquid circuit C2a while the two electromagnetic valves 114 and 115 are controlled to be closed by the controller 110. This prevents the piping that extends from the electromagnetic values 114 and 115 to the cooler core 72 from breaking when the internal pressure in the piping is increased due to vaporization of the cooling liquid or other causes.

The configuration of the pressure sensor 112, the two electromagnetic valves 114 and 115, and the controller 110 described above may be applied to the first cooling liquid circuit C1 or the third cooling liquid circuit C3. For example, in the third cooling liquid circuit C3, the electromagnetic valves 114 and 115 may be respectively disposed upstream and downstream of the battery 54 (see FIG. 1).

### <Another air conditioner>

Next, another air conditioner will be described. FIG. 7 is a schematic diagram showing the configuration of another air conditioner 12a. This air conditioner 12a has a configuration in which the expansion valve 24b, the third heat exchanger 50, and the third cooling liquid circuit C3 are omitted from the above air conditioner 12 (see FIG. 1). The refrigerant circuit Ra of this air conditioner 12a is configured by connecting the compressor 20, the condenser 22, the receiver 28, the expansion valve 24a, and the evaporator 26a in series by refrigerant pipes.

This air conditioner 12a is configured so as not to cool the battery 54 (see FIG. 1). The battery 54 may be cooled by a cooling device provided separately from the air conditioner 12a. In addition, vehicles such as engine vehicles that do not have the battery 54 (the battery that supplies power to the motor) can adopt this air conditioner 12a because a cooling device for the battery is not required. The configuration of the cooling liquid circuit C2, C2a (FIGs. 3 to 6) described above may be applied to this air conditioner 12a.

## Claims

1. An in-vehicle air conditioner (12, 12a) comprising:
a refrigerant circuit (R, Ra) for circulating a hydrocarbon refrigerant, the refrigerant circuit (R, Ra) comprising a compressor (20), a condenser (22) for heat dissipation, an expansion valve (24a), and an evaporator (26a) for heat absorption;
a heat exchanger (40) which is integrally formed with the evaporator (26a) of the refrigerant circuit (R, Ra) to cool a cooling liquid with the refrigerant contained in the evaporator (26a);
a cooling liquid circuit (C2, C2a) for circulating the cooling liquid, the cooling liquid circuit (C2, C2a) having a cooler core (72); and
an air conditioning unit (70) comprising an air passage (75) in which the cooler core (72) is disposed, the air conditioning unit (70) configured to cool air passing through the air passage (75) by the cooler core (72) and supply the cooled air to a vehicle compartment (90), wherein
the cooling liquid circuit (C2, C2a) comprises a gas-liquid separator (100) and a relief valve (102); and
the relief valve (102) is disposed on a top part of the gas-liquid separator (100) outside the vehicle compartment (90) and is configured to open when a pressure inside the gas-liquid separator (100) is increased.

2. The in-vehicle air conditioner according to claim 1, wherein
the cooling liquid circuit (C2, C2a) further comprises a hose (104) connected to an exhaust port of the relief valve (102) and extending downward in a vehicle.

3. The in-vehicle air conditioner according to claim 1 or 2, wherein
the cooling liquid circuit (C2a) further comprises a pressure sensor (112) configured to detect a pressure in piping of the cooling liquid circuit (C2a), and electromagnetic valves (114, 115) respectively disposed upstream and downstream of the cooler core (72) in the cooling liquid circuit (C2a) outside the vehicle compartment (90);
the in-vehicle air conditioner further comprises a controller (110); and
the controller (110) is configured to control both of the electromagnetic valves (114, 115) to be set to a closed position when a detection value from the pressure sensor (112) becomes higher than a predetermined value, and otherwise maintain both of the electromagnetic values (114, 115) in an open position.

4. The in-vehicle air conditioner according to claim 3, wherein
when both of the electromagnetic valves (114, 115) are in the closed position, at least one of the electromagnetic values (114, 115) is set to the open position so as to function as a relief valve when a pressure is increased in a portion of the piping that extends from the electromagnetic values (114, 115) to the cooler core (72) in the cooling liquid circuit (C2a).

5. The in-vehicle air conditioner according to claim 1 or 2, wherein
the hydrocarbon refrigerant is a refrigerant composed of propane or a refrigerant mainly composed of propane.
